Europäisches Patentamt

**European Patent Office**

**Office européen des brevets**

(11) Numéro de publication: **0 191 667**
A1

## (12) DEMANDE DE BREVET EUROPEEN

(21) Numéro de dépôt: **86400073.2**

(22) Date de dépôt: **15.01.86**

(51) Int. Cl.⁴: **H 02 G 3/04**

(30) Priorité: **16.01.85 FR 8500581**

(43) Date de publication de la demande: **20.08.86**
**Bulletin 86/34**

(84) Etats contractants désignés: **BE CH DE GB IT LI LU NL**

(71) Demandeur: **KRIEG ET ZIVY, 10, Avenue Descartes,**
**F-92352 Le Plessis Robinson (FR)**

(72) Inventeur: **Jure, Guy, 14 Domaine de Miremont,**
**F-91190 Gif-sur-Yvette (FR)**
Inventeur: **Fessard, Pierre, 34 Rue Henri Bourrelier,**
**F-91370 Verrieres-le-Buisson (FR)**

(74) Mandataire: **CABINET BONNET-THIRION, 95 Boulevard**
**Beaumarchais, F-75003 Paris (FR)**

(54) **Chemin de câble en treillis.**

(57) Il s'agit d'un chemin de câble du genre comportant, pour la constitution d'un profil en gouttière, un panneau de fond (10) et deux panneaux latéraux (11A, 11B) constitués chacun d'un treillis de tronçons de fil convenablement solidarisés les uns aux autres à leur croisement.

Suivant l'invention, l'un au moins des panneaux latéraux (11A, 11B) est articulé au panneau de fond (10), en combinaison avec des moyens de retenue (15) propres au maintien en position du panneau latéral concerné lorsque celui-ci est dressé à l'équerre par rapport audit panneau de fond (10).

Application aux chemins de câble en fils.

"Chemin de câble en treillis"

La présente invention concerne d'une manière générale les chemins de câble, c'est-à-dire les goulottes à profil en gouttière, usuellement mises en oeuvre pour le support et la protection de quelconques canalisations ou conduites, et, notamment, pour la protection et le support de câbles électriques.

Elle vise, plus particulièrement, ceux de ces chemins de câble dont tant le panneau de fond que les deux panneaux latéraux sont chacun constitués d'un treillis de tronçons de fil convenablement solidarisés les uns aux autres à leur croisement.

Ces chemins de câble, qui sont connus de longue date, notamment par le brevet américain No 2.891.750, ont en particulier pour avantage de se prêter avec une grande facilité à une sortie latérale de câble(s) en un quelconque de leurs points, puisqu'il suffit, au point considéré, de faire passer ce ou ces câble(s) entre deux de leurs tronçons de fil constitutifs.

A ce jour, et comme cela est d'ailleurs également le cas pour les chemins de câble en métal ouvré ou plié de type usuel, les chemins de câble en fils ont leurs panneaux latéraux d'un seul tenant avec leur panneau de fond.

Une telle disposition a donné et peut encore donner satisfaction.

Cependant, elle présente l'inconvénient de conduire à des volumes morts importants, lors du stockage et du transport des chemins de câble concernés.

Le coût d'un tel stockage ou d'un tel transport s'en trouve grevé d'autant.

Cet inconvénient se trouve aggravé lorsque, comme cela est le cas pour certaines destinations, il est nécessaire, pour leur transport, d'emballer ces chemins de câble.

Le coût de leur emballage peut alors représenter une part non négligeable de l'ensemble, de l'ordre de 5 à 10 % par exemple.

La présente invention a d'une manière générale pour objet une disposition permettant de minimiser, sinon annuler, cet inconvénient.

De manière plus précise, elle a pour objet un chemin de câble du genre comportant, pour la constitution d'un profil en gouttière, un panneau de fond et deux panneaux latéraux, lesdits panneaux étant chacun constitués d'un treillis de tronçons de fil convenablement solidarisés les uns aux autres à leur croisement, ce chemin de câble étant d'une manière générale caractérisé en ce que l'un au moins des panneaux latéraux est articulé au panneau de fond, en combinaison avec des moyens de retenue propres au maintien en position du panneau latéral concerné lorsque celui-ci est dressé à l'équerre par rapport audit panneau de fond.

Le panneau latéral ainsi articulé au panneau de fond peut dès lors occuper l'une ou l'autre de deux positions, à savoir une position rabattue d'attente, pour laquelle il s'étend sensiblement dans le prolongement du panneau de fond, et une position dressée de service pour laquelle il s'étend sensiblement perpendiculairement à celui-ci.

Il suffit donc, pour le stockage ou le transport du chemin de câble suivant l'invention, d'en laisser en position rabattue d'attente le panneau latéral concerné : ayant alors globalement en section transversale un profil en L, et non plus un profil en gouttière, ce chemin de câble se prête avantageusement à un empilage particulièrement compact avec d'autres chemins de câble de même type, ce qui conduit à une minimisation notable de l'encombrement de l'ensemble, et, notamment, à une réduction quasi totale du volume mort correspondant.

Bien entendu, l'un et l'autre des panneaux latéraux peuvent ainsi être chacun individuellement articulés au panneau de fond.

En pratique, les treillis constitutifs des divers panneaux comportant des tronçons de fil longitudinaux et des tronçons de fil transversaux, certains au moins des tronçons de fil transversaux d'un panneau latéral articulé au panneau de fond sont, à leur base, pour l'articulation de ce panneau latéral, en prise par une boucle avec un même tronçon de fil longitudinal du panneau de fond disposé en bordure de celui-ci.

Il est ainsi avantageusement tiré parti de la structure même en fil du chemin de câble suivant l'invention pour réaliser de manière très simple l'articulation recherchée.

Les caractéristiques et avantages de l'invention ressortiront d'ailleurs de la description qui va suivre, à titre d'exemple, en référence aux dessins schématiques annexés sur lesquels :

la figure 1 est une vue en perspective d'un élément de chemin de câble suivant l'invention ;

la figure 2 en est, à échelle supérieure, une vue en coupe transversale, suivant la ligne II-II de la figure 1 ;

la figure 3 en est, à la même échelle que la figure 2, une vue partielle en coupe longitudinale, suivant la ligne III-III de la figure 2 ;

la figure 4 en est, à l'échelle de la figure 2, une vue de bout, pour la position rabattue d'attente du panneau latéral articulé que comporte cet élément de chemin de câble suivant l'invention ;

la figure 5 est, à échelle différente, une vue en perspective d'un des organes d'encliquetage prévus pour le maintien en position dressée de service de ce panneau latéral articulé, représenté isolément ;

la figure 6 est une vue en coupe transversale analogue à celle de la figure 2, pour une variante de réalisation du chemin de câble suivant l'invention ;

la figure 7 est, à la manière de la figure 4, une vue partielle de bout de cette variante de réalisation ;

la figure 8 en est une vue partielle en plan, suivant la flèche VIII de la figure 7.

Tel qu'illustré sur ces figures, et de manière connue en soi, le chemin de câble suivant l'invention, dont seul un élément ou tronçon est représenté sur les figures, comporte, globalement, pour la constitution d'un profilé en gouttière, un panneau de fond 10 et deux panneaux latéraux 11A, 11B, et ces divers panneaux sont chacun constitués d'un treillis de tronçons de fil convenablement solidarisés les uns aux autres à leur croisement, par exemple par soudage.

En pratique, les treillis ainsi constitutifs de ces panneaux 10 et 11A, 11B comportent, suivant une première nappe, des tronçons de fil longitudinaux 12, qui, écartés les uns des autres, courent parallèlement les uns aux autres suivant la direction générale d'allongement de l'ensemble, et, suivant une deuxième nappe, des tronçons de fil transversaux 13, qui, également écartés les uns des autres, et également disposés parallèlement les uns aux autres, s'étendent chacun individuellement orthogonalement aux tronçons de fil longitudinaux 12 précédents.

En pratique, dans les formes de réalisation représentées, les tronçons de fil longitudinaux 12 sont disposés à l'extérieur des tronçons de fil transversaux 13, et les fils correspondants ont tous une même section circulaire.

Suivant l'invention, l'un au moins des panneaux latéraux 11A, 11B est articulé au panneau de fond 10, en combinaison avec des moyens de retenue, détaillés ultérieurement, propres au maintien en position du panneau latéral concerné lorsque celui-ci est dressé à l'équerre par rapport audit panneau de fond 10.

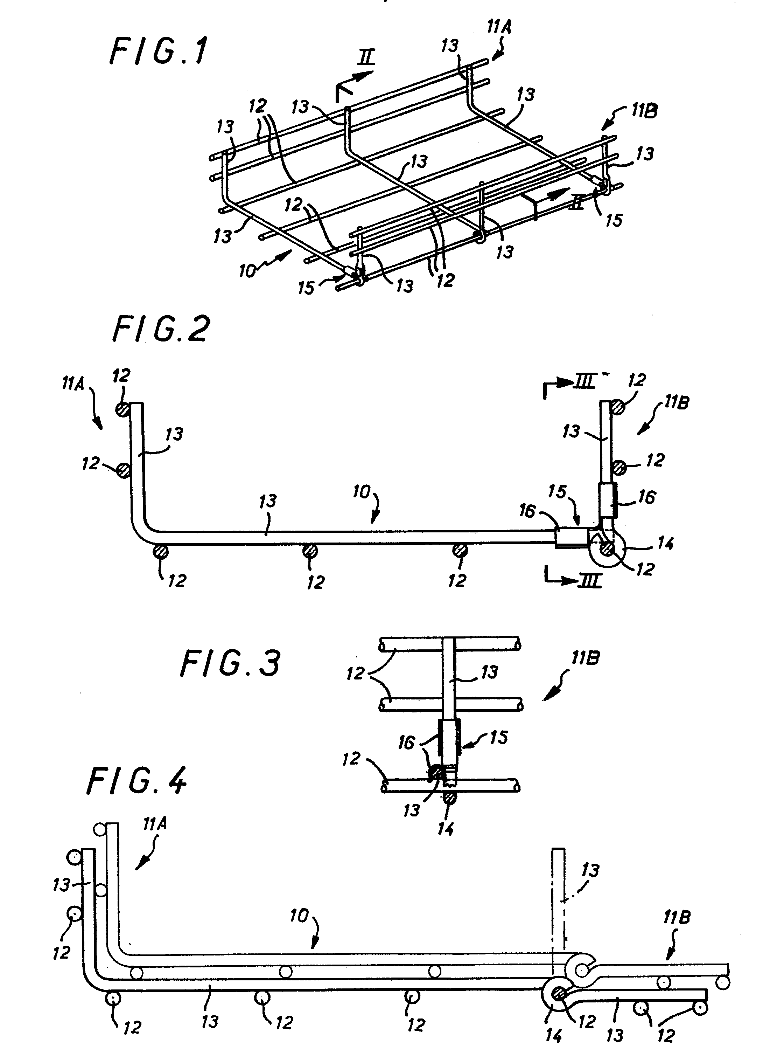

Dans la forme de réalisation plus particulièrement représentée sur les figures 1 à 4, seul l'un des panneaux latéraux 11A, 11B est ainsi articulé au panneau de fond 10.

Il s'agit, en l'espèce, du panneau latéral 11B.

L'autre des panneaux latéraux 11A, 11B, et il s'agit donc, en l'espèce, du panneau latéral 11A, est au contraire d'un seul tenant avec le panneau de fond 10 dans cette forme de réalisation.

Autrement dit, dans la forme de réalisation représentée sur les figures 1 à 4, les tronçons de fil transversaux 13 du panneau latéral 11A sont chacun individuellement en continuité avec ceux du panneau de fond 10, chacun des tronçons de fil transversaux correspondants ayant donc ainsi un profil en L.

En pratique, dans la forme de réalisation représentée, le panneau latéral 11A ne comporte que deux tronçons de fil longitudinaux 12, avec l'un de ceux-ci au ras de l'extrémité libre de ses tronçons de fil transversaux 13.

Il en est de même pour le panneau latéral 11B.

Corollairement, dans cette forme de réalisation, le panneau de fond 10 comporte quatre tronçons de fil longitudinaux 12, avec les deux extrêmes de ceux-ci disposés en bordure, à son raccordement avec les panneaux latéraux 11A, 11B.

Pour l'articulation au panneau de fond 10 du panneau latéral 11B, certains au moins des tronçons de fil transversaux 13 de ce panneau latéral 11B sont, à leur base, en prise par une boucle 14 avec le tronçon de fil longitudinal de bordure 12 correspondant dudit panneau de fond 10.

En pratique, il en est ainsi pour chacun des tronçons de fil transversaux 13 du panneau latéral 11B.

En pratique, également, la boucle 14 que présente ainsi un tel tronçon de fil transversal 13 est forméepar un prolongement de ce fil transversal 13, d'un seul tenant avec celui-ci.

Bien entendu, cette boucle 14 est suffisamment lâche pour permettre le pivotement du tronçon de fil 13 correspondant, et donc de l'ensemble du panneau latéral 11B, autour du tronçon de fil longitudinal 12 du panneau de fond 10 qu'elle enserre.

Du fait des boucles 14 ainsi présentes à la base des tronçons de fil transversaux 13 du panneau latéral 11B, ces tronçons de fil transversaux 13 sont légèrement décalés, d'une épaisseur, par rapport à ceux, correspondants, du panneau de fond 10.

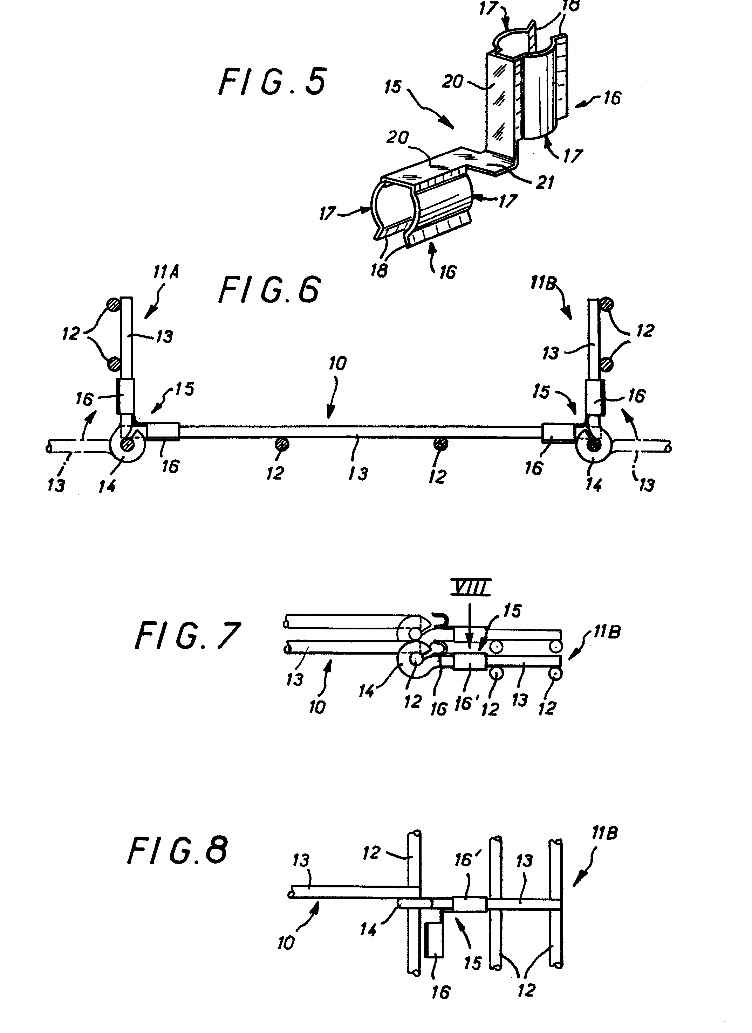

Dans la forme de réalisation représentée, les moyens de retenue associés au panneau latéral 11B comportent au moins un organe d'encliquetage 15, et ledit organe d'encliquetage 15, qui est représenté isolément à la figure 5, présente deux branches 16, par lesquelles il est apte à être en prise avec un tronçon de fil transversal appartenant audit panneau latéral 11B, pour l'une d'elles, et avec le tronçon de fil transversal 13 correspondant du panneau de fond 10, pour l'autre de celles-ci, et dont une au moins comporte deux ailes élastiquement déformables 17, pour son encliquetage sur un tel tronçon de fil transversal 13.

En pratique, il est prévu ainsi plusieurs organes d'encliquetage 15, convenablement répartis le long du panneau latéral 11B.

Mais il n'en est pas nécessairement associé un à chacun des tronçons de fil transversaux de ce panneau latéral 11B.

Dans la forme de mise en oeuvre illustrée, il n'est par exemple prévu un tel organe d'encliquetage 15 que pour un sur deux des tronçons de fil transversaux du panneau latéral 11B.

En pratique, les deux branches 16 des organes d'encliquetage 15 ainsi mis en oeuvre s'étendent globalement en équerre l'une par rapport à l'autre, en étant conjointement décalées latéralement l'une par rapport à l'autre.

Dans la forme de réalisation représentée sur les figures 1 à 5, l'une et l'autre de ces branches 16 comportent deux ailes élastiquement déformables 17, chacun des organes d'encliquetage 15 constituant par lui-même une pièce qui, indépendante des panneaux qu'elle doit relier, est à rapporter à la demande sur ces panneaux.

Ces ailes 17 ont leur partie courante conformée en arc de cercle, pour leur adaptation à la section des tronçons de fil transversaux 13 concernés, et, pour leur engagement sur un tel tronçon de fil transversal 13, elles présentent, le long de leur bord libre, des lèvres 18 qui vont globalement en divergeant l'une par rapport à l'autre vers l'extérieur.

C'est par leur partie médiane 20, intermédiaire entre leurs ailes 17, que les deux branches 16 d'un organe d'encliquetage 15 sont reliées l'une à l'autre.

La partie médiane 20 d'une de ces branches 16 se prolonge à cet effet par une languette 21, qui est coudée à l'équerre, et qui, latéralement, se raccorde à la partie médiane 20 de l'autre desdites ailes 16.

Par exemple, l'ensemble peut venir d'un seul tenant d'un même flan métallique, convenablement découpé et mis en forme.

Il peut également, en variante, être réalisé par moulage d'une quelconque matière synthétique appropriée.

En pratique, et tel que représenté, la partie médiane 20 de chacune des branches 16 est décalée radialement par rapport aux extrémités correspondantes des ailes 17 d'une telle branche 16.

Du fait de son articulation au panneau de fond 10, le panneau latéral 11 peut occuper diverses positions par rapport au panneau de fond, et, notamment, une position rabattue d'attente, pour laquelle, tel que représenté en trait plein sur la figure 4, il s'étend sensiblement dans le prolongement de ce panneau de fond 10, et une position dressée de service, pour laquelle, tel que schématisé en traits interrompus sur cette figure 4, et en trait plein sur les figures 1, 2, 3, il s'étend au contraire sensiblement perpendiculairement audit panneau de fond 10.

Lorsqu'il est en position rabattue d'attente, le chemin de câble suivant l'invention a globalement un profil en L, ce qui en facilite l'empilage, tel que schématisé en trait fin sur la figure 4.

Lorsqu'il est en position dressée de service, le chemin de câble suivant l'invention a, de manière traditionnelle, un profil en U.

Pour le maintien en position du panneau latéral 11B lorsque celui-ci est ainsi en position dressée de service, des organes d'encliquetage 15A sont de place en place engagés à force, par déformation élastique des ailes 17 de leurs branches 16, sur les tronçons de fil transversaux 13, proches l'un de l'autre, de ce panneau latéral 11B et du panneau de fond 10 auquel il est articulé.

Bien entendu, plusieurs éléments ou tronçons de chemin de câble ainsi constitués peuvent être mis bout à bout, en étant convenablement solidarisés deux à deux.

Dans la variante de réalisation illustrée par les figures 7, 8, les panneaux latéraux 11A, 11B sont l'un et l'autre articulés au panneau de fond 10, suivant des dispositions du même type que celles décrites ci-dessus en référence au seul panneau latéral 11B.

Lorsque, tel que schématisé en traits interrompus à la figure 6, et tel que représenté en trait plein pour l'un d'eux à la figure 7, ces panneaux latéraux 11A, 11B sont l'un et l'autre en position rabattue d'attente, le chemin de câble suivant l'invention s'étend globalement à plat, ce qui en facilite le stockage et le transport.

Par ailleurs, dans cette variante de réalisation, chacun des organes d'encliquetage 15 mis en oeuvre est assujetti à demeure à l'un des panneaux concernés, en sorte qu'il équipe par avance le chemin de câble.

Par exemple, s'agissant du panneau latéral 11A, un tel organe d'encliquetage 15 peut être assujetti à demeure à ce panneau latéral 11A, sa branche 16' correspondante étant alors constituée d'une douille par laquelle il enserre, avec possibilité de rotation, le tronçon de fil transversal 13 correspondant de celui-ci.

Pour éviter que, pour la position rabattue d'attente d'un tel panneau 11A, cet organe d'encliquetage 15 ne fasse saillie sur le plan correspondant de l'ensemble, ledit organe d'encliquetage 15 est rabattu dans ce plan, par pivotement autour du tronçon de fil transversal 13 qu'il enserre, tel que représenté sur les figures 7, 8 ; il s'étend alors dans l'épaisseur même de la nappe de fil correspondante.

Il suffit, ensuite, lorsque le panneau 11A en question est en position dressée de service, de faire pivoter de 90° autour de ce tronçon de fil transversal 13 un tel organe d'encliquetage 15, puis de le faire coulisser le long de celui-ci, pour que ledit organe d'encliquetage 15 vienne alors en prise, par son autre branche 16, avec le tronçon de fil 13 correspondant du panneau de fond 10.

Bien entendu, une disposition de même type peut être adoptée pour la forme de réalisation, à un seul panneau latéral articulé, illustrée par les figures 1 à 4 précédentes.

La présente invention ne se limite d'ailleurs pas aux formes de réalisation décrites et représentées, mais englobe toute variante d'exécution et/ou de combinaison de leurs divers éléments, notamment en ce qui concerne les organes d'encliquetage.

En outre, d'autres moyens de retenue que ces organes d'encliquetage peuvent être envisagés.

REVENDICATIONS

1. Chemin de câble, du genre comportant, pour la constitution d'un profil en gouttière, un panneau de fond (10) et deux panneaux latéraux (11A, 11B), lesdits panneaux (10, 11A, 11B) étant chacun constitués d'un treillis de tronçons de fil (12, 13) convenablement solidarisés les uns aux autres à leur croisement, caractérisé en ce que l'un au moins des panneaux latéraux (11A, 11B) est articulé au panneau de fond (10), en combinaison avec des moyens de retenue propres au maintien en position du panneau latéral (11A, 11B) concerné lorsque celui-ci est dressé à l'équerre par rapport au panneau de fond (10).

2. Chemin de câble suivant la revendication 1, caractérisé en ce que, les treillis constitutifs des divers panneaux (10, 11A, 11B) comportant des tronçons de fil longitudinaux (12) et des tronçons de fil transversaux (13), certains au moins des tronçons de fil transversaux (13) du panneau latéral (11A, 11B) articulé au panneau de fond (10) sont, à leur base, pour l'articulation dudit panneau latéral (11A, 11B), en prise par une boucle (14) avec un même tronçon de fil longitudinal (12) du panneau de fond (10) disposé en bordure de celui-ci.

3. Chemin de câble suivant la revendication 2, caractérisé en ce que ladite boucle (14) est formée par un prolongement du fil transversal (13) concerné, d'un seul tenant avec celui-ci.

4. Chemin de câble suivant l'une quelconque des revendications 2, 3, caractérisé en ce que chacun des fils transversaux (13) du panneau latéral (11A, 11B) concerné comporte une boucle (14) à sa base.

5. Chemin de câble suivant l'une quelconque des revendications 1 à 4, caractérisé en ce que seul l'un des panneaux latéraux (11A, 11B) est articulé au panneau de fond (10), l'autre de ceux-ci étant au contraire d'un seul tenant avec ce dernier.

6. Chemin de câble suivant l'une quelconque des revendications 1 à 4, caractérisé en ce que l'un et l'autre des panneaux latéraux (11A, 11B) sont articulés au panneau de fond.

7. Chemin de câble suivant l'une quelconque des revendications 1 à 6, caractérisé en ce que les moyens de retenue associés à un panneau latéral (11A, 11B) articulé au panneau de fond (10) comportent au moins un organe d'encliquetage (15), et ledit organe d'encliquetage (15) présente deux branches (16), par lesquelles il est apte à être en prise avec un tronçon de fil (12, 13) appartenant audit panneau latéral (11A, 11B), pour l'une d'elles, et avec un tronçon de fil (12, 13) appartenant audit panneau de fond (10), pour l'autre de celles-ci, et dont une au moins comporte deux ailes élastiquement déformables (17) pour son encliquetage sur un tel tronçon de fil (12, 13).

8. Chemin de câble suivant la revendication 7, caractérisé en ce que l'une et l'autre des branches (16) de l'organe d'encliquetage (15) comportent deux ailes élastiquement déformables (17), ledit organe d'encliquetage (15) constituant par lui-même une pièce qui, indépendante des panneaux (10, 11A, 11B) qu'elle doit relier, est à rapporter à la demande sur ces panneaux (10, 11A, 11B).

9. Chemin de câble suivant la revendication 7, caractérisé en ce que, par l'une de ses branches (16), l'organe d'encliquetage (15) est assujetti à demeure au panneau (10, 11A, 11B) concerné, en sorte qu'il équipe par avance le chemin de câble.

10. Chemin de câble suivant l'une quelconque des revendications 7 à 9, caractérisé en ce que les deux branches (16) de l'organe d'encliquetage (15) s'étendent globalement en équerre l'une par rapport à l'autre, en étant conjointement décalées latéralement l'une par rapport à l'autre.

11. Chemin de câble suivant l'une quelconque des revendications 7 à 10, caractérisé en ce qu'il est prévu plusieurs organes d'encliquetage (15), convenablement répartis le long du panneau latéral (11A, 11B) concerné.

0191667

1 / 2

FIG.1

FIG.2

FIG.3

FIG.4

FIG.5

FIG.6

FIG.7

FIG.8

Office européen
des brevets

**RAPPORT DE RECHERCHE EUROPEENNE**

Numero de la demande

EP 86 40 0073

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl.4) |
| Y | DE-A-2 014 393 (NIEDAX)<br>* Page 9, alinéas 2,3; figures 5,8 * | 1,6 | H 02 G 3/04 |
| Y | US-A-2 199 152 (EDGE)<br>* Page 1, colonne de gauche, lignes 18-20, colonne de droite, lignes 46-50; page 2, colonne de gauche, lignes 56-62; figures 1,4 * | 1,6 | |
| A | FR-A-2 017 070 (RIETH)<br>* Page 2, lignes 8-16, 30-40; page 3, lignes 8-30; page 8, ligne 2 - page 9, ligne 10; figures 6-8,11,14 * | 1,7,8 | DOMAINES TECHNIQUES RECHERCHES (Int. Cl.4)<br><br>H 02 G 3/00 |

Le présent rapport de recherche a été établi pour toutes les revendications

| Lieu de la recherche | Date d'achèvement de la recherche | Examinateur |
|---|---|---|
| LA HAYE | 24-04-1986 | TIELEMANS H.L.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82